# EUROPÄISCHE PATENTANMELDUNG

(11) **EP 2 832 898 A1**
(43) Veröffentlichungstag der Anmeldung: **04.02.2015**
(21) Anmeldenummer: 14154045.0
(22) Anmeldetag: 05.02.2014
(51) Int. Cl.: C25D 11/02, B32B 15/01, C25D 11/04, C25D 11/26, C25D 11/30

(54) **Plasmaelektrolytisch veredeltes Bauteil und Verfahren zu seiner Herstellung**

(71) Anmelder: ThyssenKrupp Steel Europe AG, 47166 Duisburg (DE); ThyssenKrupp AG, 45143 Essen (DE)
(72) Erfinder: Klauke, Peter, 58239 Schwerte (DE)
(74) Vertreter: Cohausz & Florack

(57) **Zusammenfassung**

Die Erfindung betrifft ein Verfahren zur Herstellung eines Oberflächen oxidierten, metallischen Bauteils oder Halbzeugs, dessen Verwendung sowie entsprechende flächige Bauteile, insbesondere Außenhautteile eines Kraftfahrzeugs, wie Motorhauben, Autodächer, Autotüren, Kotflügel und/oder Seitenrahmen, Backbleche oder Badewannen. Die Aufgabe der vorliegenden Erfindung, ein Verfahren zur Herstellung von oberflächenoxidierten Bauteilen oder Halbzeugen vorzuschlagen, die eine zumindest teilweise oberflächenoxidierte Oberfläche aufweisen, wobei das Verfahren trotz benötigter Umformschritte für die Massenproduktion geeignet ist, wird durch ein Verfahren zur Herstellung eines oberflächenoxidierten, metallischen Bauteil oder Halbzeugs umfassend die folgenden Verfahrensschritte gelöst:
- Bereitstellen eines bandförmigen oder blechförmigen metallischen Substrats,
- anschließendes zumindest bereichsweises Aufbringen mindestens einer ein- oder beidseitigen Oberflächenschicht bestehend aus einer Legierung eines oder mehrerer der Gruppe der folgenden Metalle: Al, Mg, Ti oder Zr,
- Durchführen einer zumindest bereichsweisen plasmaelektrolytischen Oxidation der aufgebrachten Oberflächenschicht des Substrats und anschließendes optionales Ablängen und Umformen des beschichteten Substrats zum Bauteil oder Halbzeug, wobei die Dicke der plasmaelektrolytisch oxidierten Teils der Oberflächenschicht weniger als 5 µm, vorzugsweise weniger als 3 µm beträgt,

oder
- optionales Ablängen des Substrats und Umformen des Substrats zum Bauteil oder Halbzeug,
- anschließendes Durchführen einer zumindest bereichsweisen plasmaelektrolytischen Oxidation der aufgebrachten Oberflächenschicht des Bauteils oder Halbzeugs, wobei die Dicke des plasmaelektrolytisch oxidierten Teils der Oberflächenschicht 5 µm bis 200 µm beträgt.

## Beschreibung

Die Erfindung betrifft ein Verfahren zur Herstellung eines Oberflächen oxidierten, metallischen Bauteils oder Halbzeugs, dessen Verwendung sowie entsprechende flächige Bauteile, insbesondere Außenhautteile eines Kraftfahrzeugs, wie Motorhauben, Autodächer Autotüren, Kotflügel und/oder Seitenrahmen, Reib- und/oder Schleifbeläge, Lagerwerkstoffe, Erzeugnisse aus dem Bereich Brat- und/oder Backblech sowie Kochgeschirr, im Baubereich in Form von Dacheindeckungen, Wand- und/oder Deckenpaneele, in der Lampen- und/oder Heizstrahlerindustrie, für Brennkammer-, Turbinen- und/oder Ofenauskleidungen sowie Abgasanlagen, Hitzeschutzschilde, Offshoreanwendungen oder Anwendungen im Sanitärbereich wie Duschtassen, Badewannen, Spültische/-becken, Verkleidungen von Waschmaschinen und/oder Wäschetrockner sowie Bauteile und/oder Verkleidungen in der Elektroindustrie und/oder Unterhaltungselektronik, Kühlkörper für elektronische Bauteile wie zum Beispiel für LED's und/oder Leistungselektronik, zur Verbesserung der Köperschalldämpfung und/oder Schalldämmung an schwingungstechnisch angeregten und/oder schallbeaufschlagten Bauteilen, im Rohrleitungsbau insbesondere mit Blick auf den Durchfluss stark korrosiver und/oder abrassiver Medien,verschleißbeanspruchte Rühr- und/oder Mischvorrichtungen sowie Verkleidungen und/oder Vorrichtungen zur Förderung von sandigen und/oder scharfkantigen Schüttgütern, sowie Oberflächen welche in der Lebensmittelindustrie mit Lebensmitteln in Kontakt kommen als auch biokompatible, verschleißfeste Schichten in der medizinischen Prothetik und/oder Medizintechnik, sowie Maßnahmen die aus konstruktiver Sicht eine vollflächige oder partielle Erhöhung der Beulfestigkeit, Beulsteifigkeit, Biegesteifigkeit, Oberflächenhärte und/oder Verschleißfestigkeit an Bauteilen erforderlich machen.

Oberflächenveredelungen von metallischen Substraten sind bekannt. Beispielsweise ist Emaille als Schutzüberzug seit langem bekannt. Bei der Emaillierung werden die Gegenstände durch Tauchen oder Spritzen mit einer Emailleschicht versehen und anschließend bei 800 bis 850 °C gebrannt. Emailleschichten können zwar auf vielen Substraten, beispielsweise auch Stahl, aufgebracht werden. Allerdings können die Emailleschichten leicht beschädigt werden und sind daher sehr stoßanfällig. Daneben ist für Aluminiumsubstrate das Eloxieren bekannt. Beim Eloxieren wird eine elektrolytische Oxidation von Aluminium genutzt, um gezielt eine Aluminiumoxidschicht auf dem Aluminiumsubstrat zu erzeugen. Die eloxierten Oberflächen weisen eine vergleichsweise große Härte auf. Für Härten von mehr als 400 HV werden dickere Schichten benötigt, die eine erhöhte Sprödigkeit besitzen. Darüber hinaus ist auch das plasmaelektrolytische Oxidieren von Aluminium bekannt, insbesondere die plasmaelektrolytische Oxidation von Aluminiumdünnschichten, welche im PVD- oder CVD-Verfahren auf ein Stahlsubstrat aufgebracht worden sind. Mit der plasmaelektrolytischen Oxidation (PEO) oder MAO (Micro arc oxidation) können extrem hohe Härten erzeugt werden. Aus "Galvanotechnik 5/2012", "Dünne keramische Schichten aus thermischen und anodischen Prozessen", T. Lampke et al, Seiten 934 ff. ist darüber hinaus bekannt, gestrahlte Stahlsubstrate durch Lichtbogen- oder Flammspritzen mit einem Aluminiumwerkstoff zu beschichten und anschließend die Oberfläche plasmaelektrolytisch zu oxidieren, so dass zumindest partiell eine Schmelzkeramik auf der Oberfläche erzeugt wird. Die plasmaelektrolytische Oxidation kann Schichthärten von bis zu 2000 HV erzeugen. PVD- und CVD-Verfahren sind aber für die Massenproduktion nicht geeignet. Zudem stellt sich das Problem, dass Bauteile und Halbzeuge in der Regel Umformprozesse durchlaufen müssen.

Hiervon ausgehend ist es daher Aufgabe der vorliegenden Erfindung ein Verfahren zur Herstellung von oberflächenveredelten Bauteilen oder Halbzeugen vorzuschlagen, die eine zumindest teilweise oberflächenveredelte Oberfläche aufweisen, wobei das Verfahren trotz benötigter Umformschritte für die Massenproduktion geeignet ist. Darüber hinaus ist es Aufgabe der Erfindung vorteilhafte Verwendungen sowie vorteilhafte Bauteile vorzuschlagen.

Gemäß einer ersten Lehre der vorliegenden Erfindung wird die Aufgabe durch ein Verfahren zur Herstellung eines oberflächenveredelten, metallischen Bauteil oder Halbzeugs umfassend die folgenden Verfahrensschritte gelöst:
- Bereitstellen eines bandförmigen oder blechförmigen metallischen Substrats,
- anschließendes zumindest bereichsweises Aufbringen mindestens einer ein- oder beidseitigen Oberflächenschicht bestehend aus einer Legierung eines oder mehrerer der Gruppe der folgenden Metalle: Al, Mg, Ti oder Zr,
- Durchführen einer zumindest bereichsweisen, insbesondere kontinuierlichen plasmaelektrolytische Oxidation der aufgebrachten Oberflächenschicht des Substrats und anschließendes optionales Ablängen und Umformen des beschichteten Substrats zum Bauteil oder Halbzeug, wobei die Dicke der plasmaelektrolytisch oxidierten Teils der Oberflächenschicht weniger als 5µm, vorzugsweise weniger als 3µm beträgt,
oder
- optionales Ablängen des Substrats und Umformen des Substrats zum Bauteil oder Halbzeug,
- anschließendes Durchführen einer zumindest bereichsweisen plasmaelektrolytischen Oxidation der aufgebrachten Oberflächenschicht des Bauteils oder Halbzeugs, wobei die Dicke des plasmaelektrolytisch oxidierten Teils der Oberflächenschicht 5 µm bis 200 µm, insbesondere bis 50 µm, vorzugsweise bis 30 µm beträgt.

Unter einem bandförmigen Substrat wird erfindungsgemäß ein Substrat verstanden, welches in Form eines Bandes, beispielsweise als Coil aufgewickelt bereitgestellt werden kann. Ein blechförmiges Substrat ist ein flächiges, üblicherweise gewalztes Substrat, dessen Dicke wesentlich kleiner ist, als dessen Breite oder Länge. Das Halbzeug unterscheidet sich von dem Bauteil dadurch, dass das Halbzeug gemäß der vorliegenden Erfindung weiteren Verfahrensschritten, auch beispielsweise Umformschritten unterzogen wird. Durch die Abfolge der Verfahrensschritte in Abhängigkeit von der Dicke der plasmaelektrolytisch umgewandelten Schicht, kann eine besonders wirtschaftliche Herstellung bereitgestellt werden.

Die zumindest bereichsweise plasmaelektrolytische Oxidation kann bei geringen Oberflächenschichtdicken von weniger als 5 µm, bevorzugt weniger als 3 µm sowohl am bandförmigen metallischen Substrat, insbesondere kontinuierlich als auch an den stückbeschichteten Blechen durchgeführt werden, bevor diese umgeformt werden.

Bei größeren plasmaelektrolytischen oxidierten Oberflächenschichtdicken von 5 µm bis 200 µm, insbesondere bis 50 µm, vorzugsweise bis 30 µm muss die plasmaelektrolytische Oxidation nach der Umformung erfolgen. Allerdings kann auch hier ausgenutzt werden, dass die einzelnen Arbeitsschritte bis zur plasmaelektrolytische Oxidation eines Teils der Oberflächenschicht besonders wirtschaftlich, beispielsweise mit bandförmigen Substraten vorzugsweise kontinuierlich durchgeführt werden kann. Die plasmaelektrolytische Oxidation der Oberfläche erfolgt im Elektrolyten mit deutlich höheren Spannungen im Vergleich zum Eloxieren. Im Elektrolytbad entsteht eine Plasmaentladung, welche die plasmaelektrolytische Oxidation der Oberfläche bewirkt. Die Oxide der Legierungen der Elemente Al, Mg, Ti und Zr zeichnen sich durch ihre besondere Härte und Korrosionsbeständigkeit aus, wobei Aluminiumlegierungen sehr kostengünstig sind und dennoch in Form ihrer Oxide sehr hohe Härten zur Verfügung stellen können. Durch die Plasmaentladung werden Oxidschichten eingestellt, die im Vergleich zum beispielsweise Eloxieren eine nahezu porenfreie, geschlossene Schicht aufweisen und für die verbesserten Korrosionsschutzeigenschaften und die höhere Härte verantwortlich sind. Es hat sich gezeigt, dass insbesondere flächige Bauteile, also blechförmige Substrate aber auch bandförmige Substrate in großem Umfang plasmaelektrolytisch mit ausreichender Produktionsgeschwindigkeit in eine Schmelzkeramik umgewandelt werden können, so dass eine Massenproduktion möglich und wirtschaftlich ist.

Das Aufbringen der ein- oder beidseitigen Oberflächenschicht des Substrats bestehend aus einer Legierung eines oder mehrerer der folgenden Metalle: Al, Mg, Ti oder Zr erfolgt gemäß einer ersten Ausgestaltung der Erfindung vorzugsweise durch Schmelztauchbeschichten oder ein Walzplattieren des Substrats. Das Schmelztauchbeschichten eignet sich insbesondere um bandförmige Substrate mit beidseitigen Oberflächenschichten zu beschichten. Mit dem Walzplattieren können auch einseitige Beschichtungen mit einer Legierung einer der folgenden Metalle: Al, Mg, Ti oder Zr aufweisenden Oberflächenschicht hergestellt werden. Allerdings ist selbstverständlich auch eine beidseitige Beschichtung durch Walzplattieren möglich. Beim Schmelztauchbad können sowohl Aluminium, Aluminium-Legierungen, Aluminium-Magnesium-Legierungen, Magnesium, Magnesium-Legierungen, Magnesium-Aluminium-Legierungen und optional Fremdbeimengungen von z.B. Eisen-, Zink, Titan-, Vanadium, Chrom, Kobalt, und/oder Mangan verwendet werden. Beide Verfahren sind für die Massenproduktion von beschichteten metallischen Substraten geeignet. Bevorzugt werden bandförmig beschichtete metallische Substrate mit diesen Verfahren hergestellt.

Vorzugsweise wird ein Substrat aus Stahl, Edelstahl, einer Nickelbasislegierung (Superlegierung) oder einer anderen Nichteisenlegierung bereitgestellt, wobei das Stahlsubstrat optional mit einer metallischen Beschichtung auf Zn-, ZnAl-, AlZn, ZnMg-Basis beschichtet sein kann. Neben mit einer Metallschicht korrosionsgeschützten Stählen, wie vorzugsweise Carbonstähle kommen auch Edelstähle, hitze- und hochkorrosionsbeständige Edelstähle oder auch Werkzeugstähle, in Frage. Nickelbasislegierungen oder auch andere Nichteisenlegierungen, wie beispielsweise Legierungen, die keine wesentlichen Bestandteile der Metalle Al, Mg, Ti und/oder Zr enthalten, eignen sich als Substrat für die Oberflächenbeschichtung und die anschließende plasmaelektrolytische Oxidation der aufgebrachten Oberflächenschicht ebenfalls.

Gemäß einer weiteren Ausgestaltung des Verfahrens wird ein Substrat aus Stahl mit einer Dicke von maximal 3,0 mm, insbesondere maximal 1,5 mm, vorzugsweise maximal 0,8 mm, besonders bevorzugt maximal 0,5 mm, bereitgestellt. Trotz der geringen Dicke der Stahlsubstrate weisen die plasmaelektrolytisch oxidierten Bauteile eine höhere Härte und einen durch die Oxidschicht bedingten höheren E-Modul auf, was letztendlich zu einer höheren Beulfestigkeit und Beulsteifigkeit führt, so dass damit eine weitere Gewichtsreduktion beispielsweise im Fahrzeugbau möglich ist. Die Schichtdicke der Beschichtung beim Schmelztauchbeschichten beträgt 10 µm bis maximal 50 µm, vorzugsweise bis maximal 30 µm. Die Schichtdicke der Beschichtung beim Walzplattieren beträgt 20 µm bis maximal 200 µm, vorzugsweise bis maximal 100 µm.

Gemäß einer weiteren Ausgestaltung der Erfindung wird das bandförmige Substrat nach dem Aufbringen der ein- oder beidseitigen Oberflächenschicht auf ein Coil aufgewickelt, um den nächsten Arbeitsschritten, beispielsweise dem Ablängen und Umformen oder der plasmaelektrolytischen Oxidation zuzuführen. Hierdurch ergeben sich weitere wirtschaftliche Vorteile bei der Herstellung der oberflächenoxidierten, metallischen Bauteile oder Halbzeuge.

Wird für das Aufbringen der Oberflächenschicht des metallischen Substrats eine Aluminiumlegierung mit maximal 11 Gew.-% Si verwendet, kann ein kostengünstiges, schmelztauchbeschichtetes metallisches Substrat bereitgestellt werden, welches über die plasmaelektrolytische Oxidation hervorragende Verschleißfestigkeiten und Oberflächenhärten bereitstellen kann. Die Oberflächenbeschichtung mit einer entsprechenden Aluminiumlegierung ist darüber hinaus technologisch in der Massenproduktion bewährt. Insbesondere die Zusammensetzung der Aluminiumlegierung sorgt dafür, dass eine besonders gute Haftung auf der Oberfläche von Stahlsubstraten gewährleistet ist.

Schließlich wird das Verfahren dadurch weiter ausgestaltet, dass anschließend an die Herstellung des eine zumindest bereichsweise plasmaelektrolytisch oxidierten Oberflächenschicht aufweisenden Bauteils oder Halbzeugs dieses mindestens einem weiteren Oberflächenbehandlungsschritt zugeführt wird. Beispielsweise ist denkbar, dass die Oberflächen des Bauteils oder des Halbzeugs einem organischen und/oder einem anorganischen Beschichtungsschritt, beispielsweise in Form einer Lackierung, Glasierung, beispielsweise farbgebende Keramikglasur, Metallisierung und/oder einer Beschichtung mit Teflon unterzogen werden, so dass zusätzliche funktionale Eigenschaften, wobei beispielsweise eine besonders geringe Haftung bei einer Teflonbeschichtung, bereitgestellt werden können.

Wie bereits zuvor ausgeführt, weisen die hergestellten Bauteile oder Halbzeuge besonders hervorzuhebende Eigenschaften auf. Die Oberflächenhärte der plasmaelektrolytisch oxidierten Oberflächenschichten ist mit bis zu 2000 HV extrem hoch, so dass die Oberflächen der Bauteile oder Halbzeuge besonders verschleißfest sind. Darüber hinaus ist die Oxidschicht nahezu porenfrei ausgebildet, so dass eine sehr gute Korrosions- und Temperaturbeständigkeit der behandelten Oberflächen erzeugt wird. Daher wird gemäß einer weiteren Lehre der vorliegenden Erfindung vorgeschlagen, die mit dem erfindungsgemäßen Verfahren hergestellten Bauteile oder Halbzeuge im Turbinen-, Triebwerks- und Motorenbau, im Offshorebau, Abgas-, Ofen- und Automobilbau, im Sanitärbereich als auch in der Medizintechnik bzw. im Bereich des eingangs Genannten zu verwenden.

In einer bevorzugten Verwendung ist das Bauteil ein Backblech, welches eine ein- oder beidseitig plasmaelektrolytisch oxidierte Oberflächenschicht aufweist. Es hat sich herausgestellt, dass plasmaelektrolytisch oxidierte Oberflächenschichten aufgrund ihrer extremen Hitzebeständigkeit und Verschleißfestigkeit für den Einsatz als industrielle Backbleche, aber auch für den Hausgebrauch, besonders geeignet sind. Gleichzeitig erlaubt die hohe Härte der Oberflächenschicht eine weitere Reduzierung der Wanddicken des Stahlsubstrats aufgrund der verbesserten Beulsteifigkeit, Beulfestigkeit und Biegesteifigkeit, so dass die Backbleche selbst eine geringere Wärmekapazität besitzen.

Eine weitere erfindungsgemäße Verwendung wird dadurch bereitgestellt, dass das Bauteil oder Halbzeug für ein Außenhautteil eines Kraftahrzeugs, wie eine Motorhaube, ein Autodach, eine Autotür, einen Kotflügel und/oder einen Seitenrahmen verwendet wird. Die extreme Oberflächenhärte wie auch die vergrößerte Beulfestigkeit, Beulsteifigkeit und Biegesteifigkeit erlauben es, wie bereits auch bei den Backblechen, die Wanddicken der Stahlsubstrate zu verringern und somit eine Gewichtseinsparung zu erzielen ohne einen Verlust an Beulsteifigkeit, Beulfestigkeit und Biegesteifigkeit hinnehmen zu müssen.

Als weitere Verwendung im Sanitärbereich sind entsprechend oberflächenoxidierte Badewannen, Spülbecken, Spülen wie auch Duschtassen denkbar, die eine deutliche härtere Oberfläche aufweisen und damit nicht so anfällig bei Stößen sind wie emaillierte Oberflächen. Ohne Weiteres lassen sich die oberflächenoxidierten Bauteile und Halbzeuge mit einer organischen und/oder anorganischen Schicht zu versehen oder weiteren Oberflächenbehandlungsschritten unterziehen.

Gemäß einer weiteren Lehre der vorliegenden Erfindung wird die aufgezeigte Aufgabe durch ein flächiges Bauteil, insbesondere ein Außenhautteil eines Kraftfahrzeugs, wie eine Motorhaube, ein Autodach, eine Autotür, einen Kotflügel und/oder einen Seitenrahmen, ein Backblech, ein Spülbecken, eine Spüle, eine Duschtasse oder eine Badewanne, dadurch bereitgestellt, dass das flächige Bauteil eine zumindest bereichsweise plasmaelektrolytisch oxidierte Schicht einer Legierung mindestens einer der Metalle Al, Mg, Ti oder Zr aufweist.

Wie bereits zuvor ausgeführt, ermöglichen die exzellenten Oberflächeneigenschaften der plasmaelektrolytisch oxidierten Bereiche des flächigen Bauteils mit weiterem Gewichtseinsparpotential, extrem hohe Verschleißfestigkeiten oder Korrosions- und Hitzebeständigkeiten. Beispielsweise sind Gewichtseinsparungen bei Außenhautteilen eines Kraftfahrzeugs, wie beispielsweise bei Motorhauben, Autodächer, Autotüren, Kotflügel und/oder Seitenrahmen denkbar. Bei dem Backblech steht dagegen nicht nur die Beulfestigkeit, Beulsteifigkeit und Biegesteifigkeit im Vordergrund, sondern auch gleichzeitig die erhöhte Verschleißfestigkeit und Korrosionsbeständigkeit bei dem verringerten Gewicht. Schließlich ist bei einer Badewanne, einem Spülbecken und/oder einer Duschtasse, welche zumindest bereichsweise eine plasmaelektrolytische oxidierte Schicht aufweist, es vorteilhaft, dass diese deutlich verschleißfester ist und somit erhebliche Vorteile gegenüber üblicherweise emaillierten Badewannen oder beispielsweise Duschtassen aufweist und auch prozesstechnisch wirtschaftlicher herstellbar sind. Auch die eingangs genannten Bauteile, welche zumindest bereichsweise eine plasmaelektrolytisch oxidierte Schicht aufweisen, haben erhebliche Vorteile gegenüber den konventionell hergestellten Bauteilen.

Gemäß einer weiteren Ausgestaltung des erfindungsgemäßen Bauteils weist das Bauteil mindestens ein Blech aus Stahl, Edelstahl, einer Nickelbasislegierung (Superlegierungen) oder einer anderen Nichteisenlegierung auf. Allen Blechen gemeinsam ist, dass die aufgebrachte Oberflächenschicht aus einer Legierung der folgenden Metalle Al, Mg, Ti oder Zr durch die plasmaelektrolytische Oxidation extrem verschleißfeste, korrosionsbeständige Oberflächen bereitstellen, die das Eigenschaftsprofil der verwendeten Werkstoffe für die Bleche deutlich erweitern können.

Weist das Bauteil eine Dicke der plasmaelektrolytisch oxidierten Schicht von weniger als 5 µm, vorzugsweise weniger als 3 µm auf, ist es möglich, dass Bauteil erst nach der plasmaelektrolytischen Oxidation der Oberflächenschicht umzuformen, so dass ein besonders wirtschaftlicher Herstellprozess gewährleistet werden kann.

Beträgt die Dicke der plasmaelektrolytisch oxidierten Schicht 5 µm bis 200 µm, insbesondere bis 50 µm, vorzugsweise bis 30 µm können dagegen ein besonders hoher Korrosionsschutz und gleichzeitig eine extreme Härte der Oberfläche in Verbindung mit hohem Verschleißschutz zur Verfügung gestellt werden.

Um weitere funktionale Eigenschaften der Oberflächen der Bauteile oder Halbzeuge bereitzustellen, weist das Bauteil zumindest bereichsweise eine weitere Oberflächenbeschichtung auf der plasmaelektrolytisch oxidierten Schicht auf. Diese weitere Beschichtung kann beispielsweise eine organische und/oder anorganische Schicht, z. B eine Lackierung, eine Glasierung, eine Metallisierung und/oder eine Beschichtung aus Teflon sein. Da die plasmaelektrolytisch oxidierten Oberflächen besonders verschleißfest sind, eignen sich diese beispielsweise insbesondere für großflächige Sanitärartikel wie beispielsweise Badewannen oder Duschtassen aber auch für Teile aus den Bereichen der weißen, braunen und roten Ware oder aus den eingangs genannten Bereichen. Als weiße Waren werden üblicherweise Haushaltsgeräte bezeichnet, beispielsweise Kühlschränke, Waschmaschinen oder Toaster. Aber auch für die braune Ware, die Waren der Unterhaltungselektronik sowie die rote Ware, nämlich Waren im Bereich der Heizungstechnologie sind die extrem verschleißfesten und korrosionsbeständigen Oberflächen und die verringerten Gewichte bzw. die verbesserte Beulfestigkeit, Beulsteifigkeit und Biegesteifigkeit der entsprechend plasmaelektrolytisch oberflächenoxidierten Bauteile vorteilhaft.

Im Weiteren soll die Erfindung anhand von Ausführungsbeispielen in Verbindung mit Zeichnung näher erläutert werden. Die Zeichnung zeigt in
- Fig. 1: in einer schematischen Darstellung die Verfahrensschritte zur Herstellung eines oberflächenoxidierten metallischen Bauteils gemäß einem Ausführungsbeispiel der vorliegenden Erfindung,
- Fig. 2, 3: zwei Ausführungsbeispiele zur Oberflächenbeschichtung des metallischen Substrats gemäß zwei Ausführungsbeispielen,
- Fig. 4 und Fig. 5: in einer schematischen Darstellung Ausführungsbeispiele für Verfahren zur Herstellung von oberflächenoxidierten, metallischen Bauteilen mit einer plasmaelektrolytisch oxidierten Schicht großer Schichtdicke und kleiner Schichtdicke sowie
- Fig. 6 bis 10: vier verschiedene Ausführungsbeispiele der erfindungsgemäßen Bauteile in schematischer Darstellung.

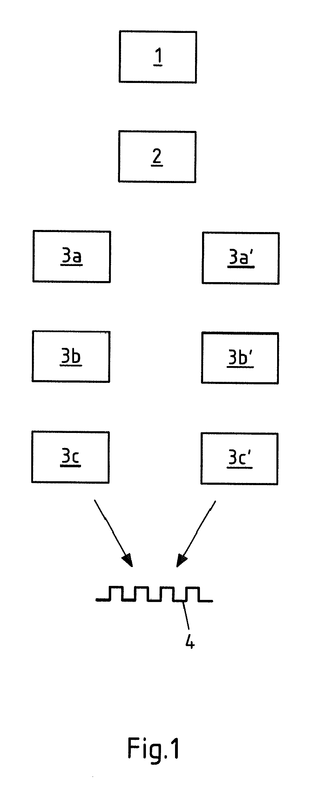

Fig. 1 zeigt zunächst in einer sehr schematischen Darstellung die verschiedenen Verfahrensschritte von Ausführungsbeispielen des erfindungsgemäßen Verfahrens. Zunächst wird im Verfahrensschritt 1 ein bandförmiges oder blechförmiges metallisches Substrat, beispielsweise ein Band oder Blech aus Stahl, Edelstahl, einer Nickelbasislegierung (Superlegierung) oder einer anderen Nichteisenlegierung bereitgestellt, wobei beispielsweise das Stahlsubstrat optional mit einer metallischen Beschichtung auf Zn-, ZnAl-, AlZn- oder ZnMg-Basis zum Korrosionsschutz beschichtet ist. Bevorzugt wird ein bandförmiges metallisches Substrat, beispielsweise ein Stahlband mit einer Dicke von maximal 3,0 mm, insbesondere maximal 1,5 mm, vorzugsweise maximal 0,8 mm, besonders bevorzugt maximal 0,5 mm, bereitgestellt, beispielsweise in Form eines Coils.

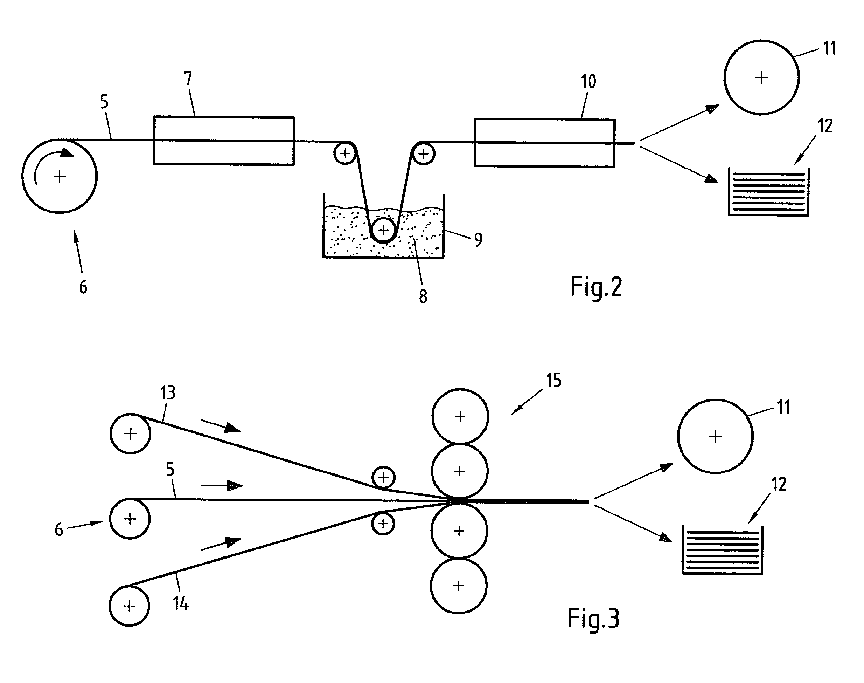

Anschließend wird im Verfahrensschritt 2 ein- oder beidseitig eine Oberflächenschicht bestehend aus einer Legierung eines oder mehrerer der folgenden Metalle: Al, Mg, Ti oder Zr auf das metallische Substrat aufgebracht, beispielsweise eine AlSi-Legierung. Ausführungsbeispiele für den Verfahrensschritt 2 sind in den Fig. 2 und 3 dargestellt.

Abhängig davon, ob durch die zumindest bereichsweise plasmaelektrolytische Oxidation der aufgebrachten Oberflächenschicht eine oxidierte Oberflächenschicht von weniger als 5 µm, vorzugsweise weniger als 3 µm oder mehr als 5 µm bis beispielsweise 200 µm, insbesondere bis 50 µm, vorzugsweise bis 30 µm durch plasmaelektrolytische Oxidation erzeugt werden soll, unterscheiden sich die weiteren Verfahrensschritte. Bei einer geringen Dicke der plasmaelektrolytisch oxidierten Oberflächenschicht von weniger als 5 µm wird gemäß Verfahrensschritt 3a die plasmaelektrolytische Oxidation beispielsweise am bandförmigen Substrat nach dessen Oberflächenbeschichtung, vorzugsweise im kontinuierlichen Prozess durchgeführt. Selbstverständlich ist auch eine blechweise plasmaelektrolytische Oxidation der aufgebrachten Oberflächenschicht möglich.

Optional wird nach der bandförmigen plasmaelektrolytischen Oxidation das entsprechend oberflächenoxidierte Band gemäß Verfahrensschritt 3b abgelängt und gemäß Verfahrensschritt 3c mit der plasmaelektrolytisch oxidierten Oberflächenschicht zu einem Bauteil, beispielsweise einem Backblech 4, umgeformt. Prinzipiell kann das bandförmig plasmaelektrolytisch oxidierte Band auch zunächst auf ein Coil aufgewickelt werden, um den nächsten Prozessschritten zugeführt zu werden.

Wird eine Dicke der plasmaelektrolytisch oxidierten Oberflächenschicht von 5 µm bis 200 µm am oberflächenbeschichteten Substrat erzeugt, wird zunächst im Schritt 3a' optional ein bandförmiges Substrat abgelängt und einem Umformschritt 3b' zugeführt, welcher das Substrat in die Endform des Bauteils bzw. Halbzeugs bringt. Bei blechförmigem oberflächenbeschichteten Substrat kann der Arbeitsschritt 3a' auch entfallen. Anschließend erfolgt im Schritt 3c' die plasmaelektrolytische Oxidation der aufgebrachten Oberflächenschicht des Bauteils zum fertigen Endprodukt, beispielsweise in Form eines Backblechs 4.

Der Prozess der plasmaelektrolytischen Oxidation 3a bzw. 3c' erfolgt üblicherweise in einem wässrigen Elektrolyten, wobei das zu oxidierende Substrat oder Bauteil anodisch gepolt wird und zusammen mit einer Gegenelektrode in den Elektrolyten geführt wird. Die zunächst rein chemisch induzierte Passivschicht wächst mit Anlegen des Potentials zwischen dem anodisch gepolten Substrat bzw. Bauteil und der Kathode. Das Potential wird weiter erhöht, so dass die Passivschicht bei einer Durchschlagspannung lokal durchschlagen wird. Hier finden plasmachemische Festkörperreaktionen statt, welche durch Funken sichtbar werden. Durch die chemische Reaktion des oxidierten Metalls mit dem hydrolytisch abgespalteten Sauerstoff wird eine Verbundschicht aus Metall und Keramik erzeugt. Die plasmachemischen Festkörperreaktionen finden dabei in der Regel an den Stellen mit dem geringsten lokalen Widerstand statt, so dass die Oberfläche mit einer lückenlosen, homogenen Schicht überzogen wird, da nach und nach alle dünnen mit einem geringen lokalen Widerstand versehenen Schichten einer plasmachemischen Festkörperreaktion ausgesetzt sind.

Beispielsweise kann über einen gepulsten Wechselstrom mit einer Stromdichte von 30 bis 80 A/dm², vorzugsweise 50 A/dm² eine Aluminiumlegierungsschicht plasmaelektrolytisch nachbehandelt werden. Der Elektrolyt kann eine Konzentration vom 1- 5 g/l, vorzugsweise 3 g/l Na₂ SiO₃ und 2- 7 g/l, vorzugsweise 5 g/l KOH enthalten. Über die Dauer und die Stromstärke kann dann die Schichtdicke des plasmaelektrolytisch oxidierten Teils der Oberflächenschicht eingestellt werden. Alle Metalle der Oberflächenbeschichtung Al, Mg, Ti und Zr können bei plasmaelektrolytischer Oxidation extrem harte Oxidschichten ausbilden, welche zu den bevorzugten Eigenschaften, beispielsweise einer extrem hohen Härte der Oberflächenschicht führen.

Aus Kostengründen sind beispielsweise Aluminiumlegierungen bevorzugt, welche zudem auch sehr hohe Härten bereitstellen können.

In Fig. 2 ist ein erstes Ausführungsbeispiel eines Verfahrens zum Aufbringen einer Oberflächenschicht, beispielsweise einer Aluminiumlegierung, schematisch dargestellt. Das Substrat 5, beispielsweise ein Substrat aus Stahl mit einer Dicke von maximal von 3,0 mm bis beispielsweise maximal 0,5 mm wird von einem Coil 6 abgewickelt und einer Vorbehandlung 7 zugeführt. Das vorbehandelte Stahlsubstrat 5 wird dann über Umlenkrollen in ein Schmelztauchbad 9 geführt, in welchem beispielsweise eine Aluminiumlegierung mit maximal 11 Gew.-% Silizium sowie den Rest Aluminium und unvermeidbare Verunreinigungen vorhanden ist. Beim Eintauchen des Bandes in das Schmelztauchbad 9 bleibt die Aluminiumlegierung an dem Stahlsubstrat 5 haften und erzeugt so eine gleichmäßige Oberflächenschicht. Die Schichtdicke wird auftauchseitig an beiden Seiten der Oberfläche des Substrats über nicht dargestellte Abblasvorrichtungen eingestellt. Im Behandlungsschritt 10 wird das Band nachbehandelt, so dass es anschließend auf einem Coil 11 aufgewickelt oder alternativ zu Blechen 12 abgelängt werden kann.

Alternativ dazu kann die Oberflächenbeschichtung auch durch ein Walzplattieren erfolgen, das schematisch in Fig. 3 dargestellt ist. Zunächst wird das bandförmige Stahlsubstrat 5 auf einem Coil 6 bereitgestellt. Zusätzlich werden Folien bestehend aus der für die Oberflächenbeschichtung vorgesehenen Metalllegierung, beispielsweise einer Legierung aus Al, Mg, Ti oder Zr als Folien 13 und 14 bereitgestellt. Üblicherweise werden die Folien 13 und 14 sowie das Stahlsubstrat vor dem Walzplattieren vorbehandelt und auf Walztemperatur erwärmt und den Arbeitswalzen 15 zugeführt. Nach dem Walzplattieren wird das oberflächenbeschichtete Substrat 5 wiederum auf ein Coil 11 oder als abgelängte Bleche 12 bereitgestellt und gegebenenfalls einem Diffusionsglühen unterzogen. Im Unterschied zum Schmelztauchverfahren kann beim Walzplattieren auch lediglich nur einseitig das Substrat 5 walzplattiert werden. Beide Verfahren können zur wirtschaftlichen Herstellung von großen Mengen an beschichteten Substraten 5, insbesondere Stahlsubstraten verwendet werden.

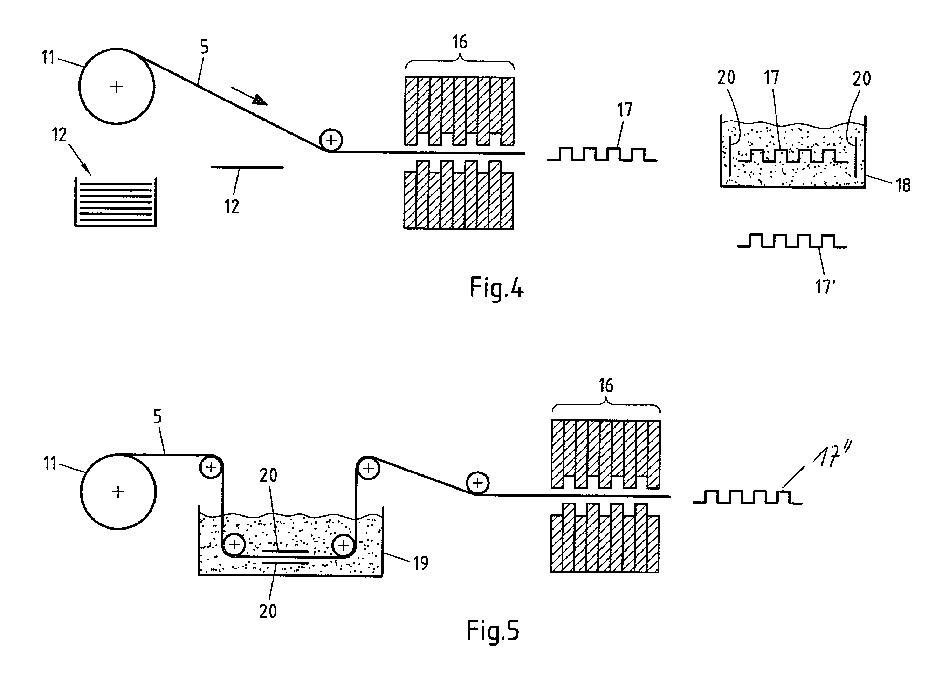

Fig. 4 zeigt die weiteren Verfahrensschritte 3a', 3b' und 3c' in einer schematischen Darstellung. Das beschichtete Substrat 5 wird in einem Coil 11 bereitgestellt und abgewickelt. Da vorgesehen ist, eine plasmaelektrolytische Oxidation von 5 µm bis 200 µm Dicke zu erzeugen, wird das oberflächenbeschichtete Substrat 11 zunächst in einem Umformschritt 16 umgeformt. Dargestellt ist hier beispielsweise ein einfacher Umformschritt zu einem Backblech mit Vertiefungen. Das Umformen kann beispielsweise bandförmig erfolgen, wobei das Ablängen in einzelne Backbleche 17 nach dem Umformschritt 16 erfolgt. Selbstverständlich ist denkbar, dass Ablängen des bandförmigen Substrats 5 vor dem Umformen zu einem Backblech durchzuführen.

Alternativ dazu sind in Fig. 4 auch die Bleche 12 dargestellt, welche dem Umformschritt 16 zugeführt werden, so dass auch aus den einzelnen Blechen wiederum beispielsweise ein Backblech 17 hergestellt wird. Anschließend wird das Backblech 17 einer plasmaelektrolytischen Oxidation in einem Elektrolytbad unterzogen. Schließlich wird die Oberfläche des Backblechs 17 mit einer plasmaelektrolytisch oxidierten Oberflächenschicht von 5 µm bis 200 µm und als oberflächenoxidiertes Backblech 17' bereitgestellt. Es können sich hier noch weitere Oberflächenbehandlungsschritte anschließen, beispielsweise ein Lackieren, ein Glasieren oder eine Beschichtung mit einer Teflonschicht. Letztere ist bei der Verwendung als Backblech sinnvoll, um das Anhaften von Backresten zu verhindern. Im industriellen Backbereich sind die üblicherweise mit Teflon beschichtete Backbleche im Einsatz, die im rauen Umfeld enormem Abrieb ausgesetzt sind und sich dadurch die Teflonschicht nach geringer Zeit ablöst. Um die Backbleche nicht nach kurzer Beanspruchung zu ersetzen, müssen diese neu teflonisiert werden, wobei sie üblicherweise einem Sandstrahlen zur vollständigen Entfernung der aufgebrauchten Teflonschicht unterzogen werden. Bei konventionellen Backblechen ist eine Wiederverwendung nur 1 bis 2 mal möglich. Erfindungsgemäße plasmaelektrolytisch oxidierte Backbleche halten beispielsweise mehreren Sandstrahlprozessen stand und können aufgrund ihrer verschleißfesten Oberfläche mindestens 5 mal und öfter teflonisiert und wieder eingesetzt werden.

Alternativ dazu ist in Fig. 5 eine bandförmige Verarbeitung des oberflächenbeschichteten Substrats 5 dargestellt. Das oberflächenbeschichtete Substrat 5 wird wieder in einem Coil 11 bereitgestellt und von diesem abgewickelt. Anschließend durchläuft das Substrat 5 ein Elektrolytbad 19, in welchem, wie im Elektrolytbad 18, Elektroden 20 vorgesehen sind. In dem Elektrolytbad wird durch plasmaelektrolytische Oxidation die Oberflächenbeschichtung des Substrats 5 in einer Schichtdicke von weniger als 5 µm, vorzugsweise weniger als 3 µm Dicke oxidiert. Die plasmaelektrolytisch oxidierte Oberflächenschicht ist dabei so dünn, dass das bandförmige Substrat zunächst coilfähig ist und ohne Weiteres einem Umformprozess, beispielsweise dem Umformschritt 16 zugeführt werden kann und die Umformung des oberflächenbeschichteten Substrats 5 inklusive der plasmaelektrolytisch oxidierten Teils der Oberflächenschicht erfolgt. Das Ablängen des bandförmigen Substrats kann beispielsweise vor dem Umformschritt 16 erfolgen. Das hergestellte Backblech 17" weist eine deutlich geringere plasmaelektrolytisch oxidierte Schichtdicke auf. Auch das Backblech 17" kann weiteren Oberflächenbehandlungsschritten wie bereits dargelegt unterzogen werden.

Als nicht dargestelltes Ausführungsbeispiel kann ein erfindungsgemäß plasmaelektrolytisch oxidiertes, bandförmiges Substrat auch einem Rollprofilierprozess zugeführt werden.

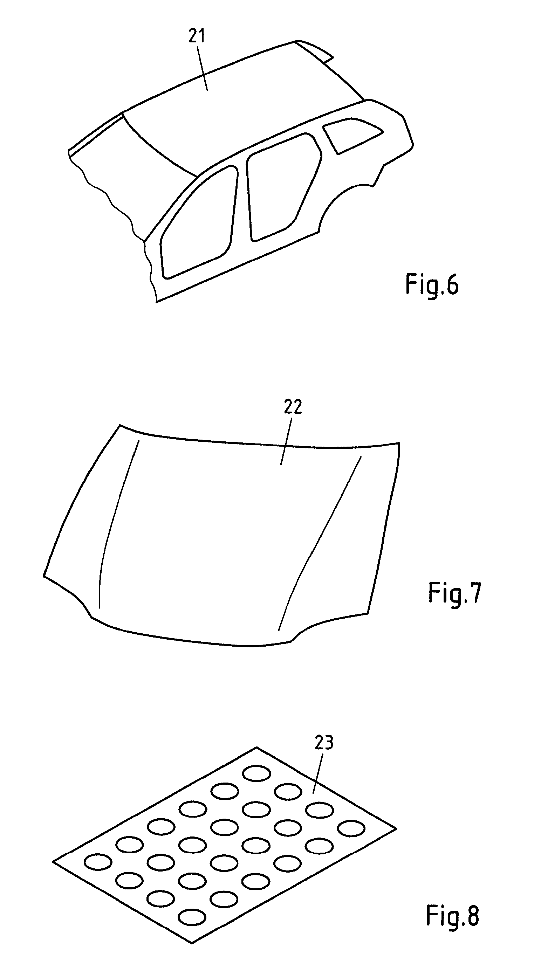

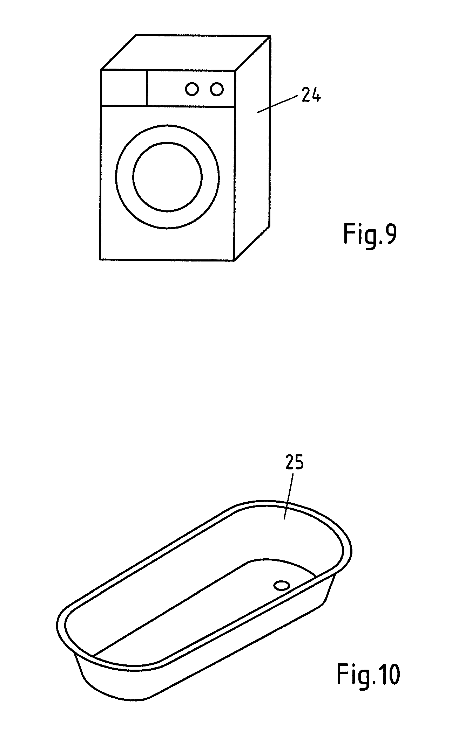

In den Fig. 6, 7, 8, 9 und 10 werden nun weitere Ausführungsbeispiele des Bauteils bzw. dessen Verwendung dargestellt. In Fig. 6 ist beispielsweise in einer schematischen, perspektivischen Ansicht ein Außenhautteil eines Kraftfahrzeugs in Form eines Dachs 21 dargestellt. Fig. 7 zeigt in einer weiteren perspektivischen, schematischen Darstellung ein Ausführungsbeispiel in Form einer Motorhaube 22. Ebenso zeigt Fig. 8 ein flächiges Bauteil eines Ausführungsbeispiels in Form eines Backblechs 23. Bei Backblechen kann beispielsweise eine zusätzliche Teflonbeschichtung dafür sorgen, dass möglichst wenig Backreste am Backblech festhaften. Aber auch für die in Fig. 9 schematisch dargestellte Waschmaschine 24 kann die zumindest teilweise plasmaelektrolytisch oxidierte Oberfläche des beschichteten Stahlsubstrats vorteilhafte Eigenschaften bereitstellen, beispielsweise in dem die Kratzfestigkeit und Korrosionsbeständigkeit, beispielsweise der Verkleidung bzw. Einhausung, deutlich erhöht wird. In Fig. 10 ist eine Badewanne 25 dargestellt, die durch die Oberflächenoxidation besonders stoßfest und kratzbeständig ausgebildet und wirtschaftlich mit weniger Aufwand als vergleichbare emaillierte Badewannen herstellbar ist.

In Abhängigkeit von dem Verwendungszweck kann ein nicht dargestelltes Lochen und/oder Stanzen, beispielsweise vor dem plasmaelektrolytischen Oxidieren am Halbzeug durchgeführt werden. Um blanke Kanten vor Korrosion zu schützen, kann in diesem Bereich nachträglich eine Legierung eines Metalls aus Al, Mg, Ti oder Zr aufgetragen, vorzugsweise aufgespritzt werden, so dass sich eine durchgehende plasmaelektrolytisch oxidierte Schicht ausbilden kann.

Alternativ können an einem Halbzeug vor dem plasmaelektrolytischen Oxidieren an Stellen, die beispielsweise zur Anbindung an weitere Bauteile dienen, insbesondere im Fahrzeugbau mit geeigneten Mitteln, beispielsweise mit Werkstoffen mit einer Durchschlagsfestigkeit von mindestens 20 kV/mm, beispielsweise eine Keramik, abgedeckt werden. Dadurch ist es möglich, in diesen Bereichen ein Schweißen insbesondere ein Widerstandsschweißen und/oder Schmelzschweißen sowie Löten durchzuführen, da sich der abgedeckte Bereich nicht in eine keramische, elektrisch isolierende Schicht während der plasmaelektrolytischen Oxidation umwandelt.

Es hat sich gezeigt, dass durch die Verwendung großtechnisch anwendbarer Oberflächenbeschichtungen von bandförmigen oder blechförmigen Substraten der Einsatz von plasmaelektrolytisch oxidierten Schichten und deren besonderen Eigenschaften in Bezug auf Verschleißfestigkeit, Temperaturstabilität und Korrosionsbeständigkeit weitere Anwendungsbereiche eröffnet, beispielsweise auch im Kraftfahrzeugbau. Beispielsweise kann über die vergrößerte Beulsteifigkeit, Beulfestigkeit und Biegesteifigkeit die Materialdicke des Stahlsubstrats weiter gesenkt werden. Dies gilt auch für Backbleche, bei welchen die Dicke des Stahlsubstrats dem benötigten Energiebedarf zum Backen der Backwaren proportional ist.

## Patentansprüche

1. Verfahren zur Herstellung eines oberflächenoxidierten, metallischen Bauteils oder Halbzeugs umfassend die folgenden Verfahrensschritte:
- Bereitstellen (1) eines bandförmigen oder blechförmigen metallischen Substrats,
- anschließendes zumindest bereichsweises Aufbringen (2) mindestens einer ein- oder beidseitigen Oberflächenschicht bestehend aus einer Legierung eines oder mehrerer der folgenden Metalle: Al, Mg, Ti oder Zr,
- Durchführen (3a) einer zumindest bereichsweisen plasmaelektrolytischen Oxidation der aufgebrachten Oberflächenschicht des Substrats und anschließendes optionales Ablängen (3b) und Umformen (3c) des beschichteten Substrats zum Bauteil oder Halbzeug, wobei die Dicke der plasmaelektrolytisch oxidierten Teils der Oberflächenschicht weniger als 5 µm beträgt,
oder
- optionales Ablängen (3a') des Substrats und Umformen (3b') des Substrats zum Bauteil oder Halbzeug,
- anschließendes Durchführen (3c') einer zumindest bereichsweisen plasmaelektrolytischen Oxidation der aufgebrachten Oberflächenschicht des Bauteils oder Halbzeugs, wobei die Dicke des plasmaelektrolytisch oxidierten Teils der Oberflächenschicht 5 µm bis 200 µm beträgt.

2. Verfahren nach Anspruch 1,
**dadurch gekennzeichnet**, das s
das ein- oder beidseitige Aufbringen einer Oberflächenschicht bestehend aus einer Legierung eines oder mehrerer der folgenden Metalle: Al, Mg, Ti oder Zr durch Schmelztauchbeschichten oder Walzplattieren des Substrats erfolgt.

3. Verfahren nach Anspruch 1 oder 2,
**dadurch gekennzeichnet, dass**
ein Substrat aus Stahl, Edelstahl, einer Nickelbasislegierung (Superlegierung) oder einer anderen Nichteisenlegierung bereitgestellt wird, wobei das Stahlsubstrat optional mit einer metallischen Beschichtung, auf Zn-, ZnMg-, ZnAl- und/oder AlZn-Basis beschichtet ist.

4. Verfahren nach einem der Ansprüche 1 bis 3,
**dadurch gekennzeichnet, dass**
ein Substrat aus Stahl mit einer Dicke von maximal 3,0 mm bereitgestellt wird.

5. Verfahren nach einem der Ansprüche 1 bis 4,
**dadurch gekennzeichnet, dass**
das bandförmige Substrat nach dem Aufbringen der ein- oder beidseitigen Oberflächenschicht auf ein Coil aufgewickelt wird, um den nächsten Arbeitsschritten zugeführt zu werden.

6. Verfahren nach einem der Ansprüche 1 bis 5,
**dadurch gekennzeichnet, dass**
für das Aufbringen der Oberflächenschicht eine Aluminiumlegierung mit maximal 11 Gew.-% Si verwendet wird.

7. Verfahren nach einem der Ansprüche 1 bis 6,
**dadurch gekennzeichnet, dass**
das hergestellte Halbzeug oder Bauteil einem weiteren Oberflächenbehandlungsschritt zugeführt wird.

8. Verwendung eines Bauteils oder Halbzeugs hergestellt mit einem Verfahren nach einem der Ansprüche 1 bis 5, im Turbinen-, Triebwerks- und Motorenbau, im Offshorebau, Abgas-, Ofen - und Automobilbau und Sanitärbereich.

9. Verwendung nach Anspruch 8,
**dadurch gekennzeichnet, dass**
das Bauteil oder Halbzeug ein Backblech (4, 17, 17', 17") ist und ein- oder beidseitig plasmaelektrolytisch oxidierte Oberflächenschichten aufweist.

10. Verwendung nach Anspruch 8,
**dadurch gekennzeichnet, dass**
das Bauteil oder Halbzeug für ein Außenhautteil (21, 22) eines Kraftahrzeugs, eine Motorhaube, Automobildächer, Türen, Kotflügel und/oder Seitenrahmen verwendet wird.

11. Flächiges Bauteil, insbesondere Außenhautteil eines Kraftfahrzeugs, Motorhaube, Dach, Tür, Backblech oder Badewanne,
**dadurch gekennzeichnet, dass**
das flächige Bauteil eine zumindest bereichsweise plasmaelektrolytisch oxidierte Schicht einer Legierung mindestens einer der folgenden Metalle Al, Mg, Ti oder Zr aufweist.

12. Bauteil nach Anspruch 11,
**dadurch gekennzeichnet, dass**
das Bauteil mindestens ein Blech aus Stahl, Edelstahl, einer Nickelbasislegierung (Superlegierung) oder einer anderen Nichteisenlegierung aufweist.

13. Bauteil nach Anspruch 11 oder 12,
**dadurch gekennzeichnet, dass**
die Dicke der plasmaelektrolytisch oxidierten Schicht weniger als 5 µm beträgt.

14. Bauteil nach Anspruch 11 oder 12,
**dadurch gekennzeichnet, dass**
die Dicke der plasmaelektrolytisch oxidierten Schicht 5 µm bis 200 µm beträgt.

15. Bauteil nach einem der Ansprüche 11 bis 14,
**dadurch gekennzeichnet, dass**
das Bauteil zumindest bereichsweise eine weitere Oberflächenbeschichtung auf der plasmaelektrolytisch oxidierten Schicht aufweist.
